# EUROPEAN PATENT SPECIFICATION

(11) **EP 1 486 923 B1**
(45) Date of publication and mention of the grant of the patent: **09.08.2017**
(21) Application number: 04013281.3
(22) Date of filing: 04.06.2004
(51) Int. Cl.: G07F 19/00, G07D 7/00

(54) **Bill transaction system**
Transaktionssystem für Ein- und Auszahlungen von Banknoten
Système de transactions pour le versement et le retrait bancaire de billets de banque

(30) Priority: 12.06.2003 JP 2003167388
(43) Date of publication of application: 15.12.2004
(60) Divisional application: 12168330.4
(73) Proprietor: Hitachi-Omron Terminal Solutions, Corp., Tokyo (JP)
(72) Inventor: Nagaya, Yuji, Tokyo 100-8220 (JP); Uemura, Toshiro, Tokyo 100-8220 (JP); Kagehiro, Tatsuhiko, Tokyo 100-8220 (JP); Sako, Hiroshi, Tokyo 100-8220 (JP)
(74) Representative: MERH-IP Matias Erny Reichl Hoffmann Patentanwälte PartG mbB

(56) References cited:
- EP-A2- 0 661 677
- EP-A2- 1 096 447
- WO-A1-00/05688
- WO-A1-01/18754
- WO-A2-03/028361
- DE-A1- 10 107 344
- DE-A1- 19 824 435
- GB-A- 2 345 571
- US-B1- 6 308 887

## Description

The present invention relates to a bill transaction system and a bill information processing method. More specifically, the present invention relates to a bill transaction system for handling information on bills or bank notes judged as counterfeit bank notes and specifying the user of the bills in an ATM having a bill deposit function such as an ATM (automatic teller machine) and a money changer.

An ATM such as an ATM and a money changer has a validation part to judge the genuineness of bills deposited. When bills deposited into the machines are judged as counterfeit bank notes by the validation part, in order to check whether the bills are really counterfeit bank notes, it is important to handle the bills to be separate from genuine bank notes and to find the user of the bills for tracing the distribution route of the counterfeit bank notes.

In relation to this, for example, Japanese Unexamined Patent Publication No. 2000-322632 discloses a technique in which when a validation part validates bills as counterfeit, the physical features such as fingerprints of the user who has used the machine are stored in a memory together with information on the numbers of the bills and timestamp to trace the user based on the information.

Further, WO 03/028361 A2 discloses a system for tracking currency bills which comprises a currency scanning device and a customer identification means and means for associating each processed bill with the customer depositing the bills.

### SUMMARY OF THE INVENTION

In the technique described in the above Japanese unexamined patent publication, information on fingerprints, timestamp and the numbers of bills stored in the memory are stored as important evidence data for specifying the user of an ATM. However, a bill tracing system in which how the ATM specifies the user based on the evidence data is not mentioned in detail. The later handling of bills judged as counterfeit is not described in detail, either.

Therefore, it is an object of the present invention to provide a bill transaction system for tracing the user who has used counterfeit bank notes, and to provide a related bill information processing method.

A bill transaction system according to the present invention has the features of claim 1. A bill information processing method according to the invention comprises the features of claim 8.

When depositing counterfeit or doubtful bank notes for a first time in the ATM by a user, optical and optionally magnetic characteristics of the counterfeit or doubtful bank notes obtained by a validator in said ATM are stored as a search data set together with information specific to said user in a search database. Also, counterfeit or doubtful bank notes are separated from bank notes judged as genuine bank notes and stacked in a storage safe box. After the counterfeit or doubtful bank notes have been verified for being counterfeit ones at a center outside said ATM, these counterfeit bank notes are deposited for a second time in said ATM, wherein the optical and optionally magnetic characteristics of said counterfeit bank notes obtained by said validator are stored as a trace data set in a trace database. A search engine compares the trace data set of the respective counterfeit bank notes with a plurality of search data sets stored in said search database and determines a degree of similarity. The result of the comparison with the highest degree of similarity directs to the search data set that is stored in the search database together with said information specific to said user, to trace said user. Thereby, the bill transaction system and the related bill information processing method according to the invention enable to trace the user who deposited counterfeit bank notes in said ATM.

In a preferable example, bill information obtained by the validator is stored in relation to an ID specific to the ATM and time at which the bills are transacted and in relation to an ID specific to the validator and a version of a validation program.

Moreover, the extracted bill information is linked to the ATM and thereby to the validator, said user (depositor) has used. More preferably, the ATM has a display operation part having a display operation screen guiding an operation of the user for transaction, the display operation part displaying guidance about an operation for extracting bill information from bills for tracing the user. After the judgement of the validator, when there are bills stacked in the storage safe box, the display operation part displays to the user a message that the bills cannot be deposited.

Preferably, the ATM, after the judgement of the validator, when there are bills stacked in the storage safe box, has printing means for printing on a printed medium a message that the bills must be inspected by a central bank to issue the printed medium as a receipt to the user of the bills.

For bills judged as counterfeit bank notes or as doubtful by the validator, a message that the bills are held by the bank for inspection is displayed on a display screen.

In a preferable example, a personal computer is used having input means for inputting a condition for searching the database (DB) about bills to be traced and display means for displaying the search condition and the check result of bill information and will be described as a terminal device 2 in an embodiment. The database (DB) and the computer may be provided in each branch office system. Further, the database (DB) may be provided in the ATM and the computer may be provided in a branch office system.

A further embodiment relates to a bill transaction system performing a bill deposit process using an ATM, which may has: a deposit process mode judging genuineness of bills deposited using a validator, and when they are judged as genuine bank notes, updating an account balance of a user in a DB provided in a center; a first storage mode, after the validation of the bills judged as counterfeit bank notes or as doubtful by a central bank, judging the bills validated as counterfeit bank notes by the validator to obtain bill information; a second storage mode judging the genuineness of the bills deposited by the user by the validator and storing the bill information in relation to information specific to the user; and a search process mode, relating to the bill information stored in the storage device in the first storage mode, searching the bill information stored in the second storage mode using a computer to obtain similar bill information.

Preferably, the second storage mode, each time the user performs deposit transaction by the ATM, creates a file including bill data created based on information obtained from the validator.

### BRIEF DESCRIPTION OF THE DRAWINGS

FIG. 1 is a diagram showing a bill transaction system of a bank to which an embodiment of the present invention is applied;
FIG. 2 is a block diagram showing the configuration of an ATM;
FIG. 3 is a schematic diagram of the operation in a bill data tracing system according to an embodiment of the present invention;
FIG. 4 is a diagram showing an example of the structure of a DB 4 for storing bill information and the result of tracing;
FIG. 5 is a diagram showing an example when category classifying bills validated by a validator;
FIG. 6 is a diagram showing a structure example of a file of bill data in a search DB 41;
FIG. 7 is a diagram showing the description of a search data file;
FIG. 8 is a diagram of assistance in explaining the contents of data of a whole header part;
FIG. 9 is a diagram of assistance in explaining the contents of data of an index part;
FIG. 10 is a diagram of assistance in explaining the contents of data of a bill data part;
FIG. 11 is a diagram showing structure examples of files in the search DB 41 according to another embodiment;
FIG. 12 is a flowchart showing a deposit process operation of an ATM according to an embodiment of the present invention;
FIG. 13 is a flowchart showing an operation when extracting bill data for tracing the user;
FIG. 14 is a diagram showing a display example of the operation of a guidance display part of an ATM about illegal bill handling in a deposit process;
FIG. 15 is a diagram showing an example of the receipt of bills issued from an ATM;
FIG. 16 is a diagram showing a display example of a guidance display operation part of an ATM when extracting bill data for tracing the user; and
FIG. 17 is a diagram showing an example of display guidance in a terminal device when executing a search engine for tracing the user.

### DESCRIPTION OF THE EMBODIMENTS

An embodiment of the present invention will be described below with reference to the drawings.

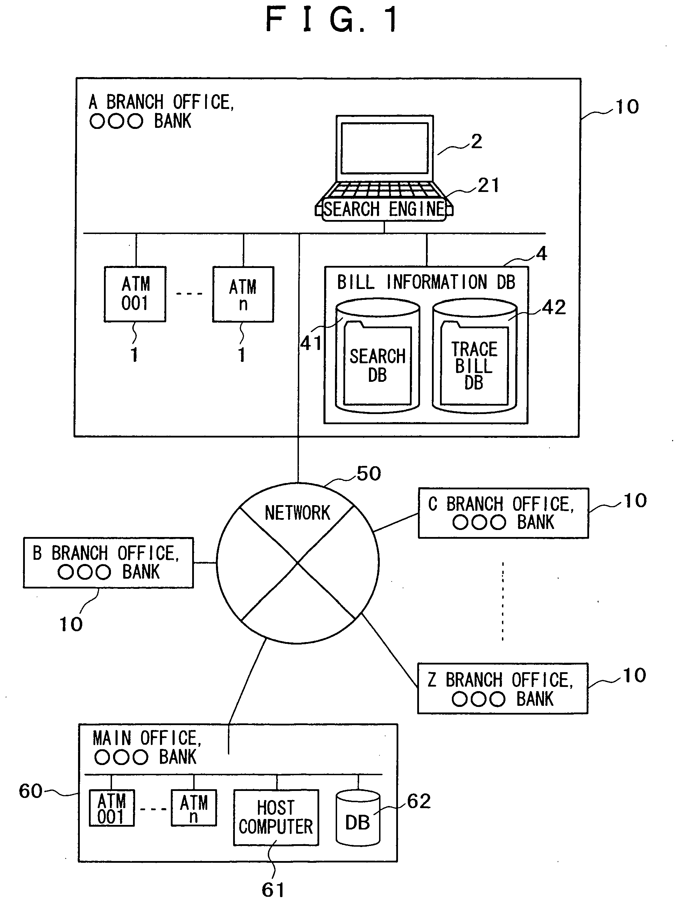

FIG. 1 is a diagram showing the entire system of a bank.

The bank system has a plurality of branch offices 10 and a main office 60 connected via a network 50. Each of the branch offices 10 has a plurality of ATMs 1, a tracing terminal device 2, and a database DB 4 storing bill information connected to a network such as a USB line or LAN in the branch office. It may include an ATM such as a money changer or a deposit-only device receiving bills as well as the ATMs 1. The ATM including the ATMs 1 in the bank system is given a specific identification code (ATM ID). A validator 3 in the ATM 1 is also given a specific identification code (a validator ID). They are for tracing the validator of the ATM in which counterfeit bank notes have been handled.

The terminal device 2 is, for example, a personal computer and has an input part, a display part, a storage part, and a processing unit. In the embodiment of the present invention, the processing unit functions as a bill search engine 21.

The bill information DB 4 has a search DB 41 and a trace bill DB 42. The search DB 41 stores bill data extracted by the validator 3. The trace bill DB 42 stores bill data to be traced. Their storage forms and operations will be described later in detail.

The main office 60 has the ATMs 1 connected to the network in it as in the branch offices and a function as a bank center. That is, the network is connected to a host computer 61 and a large-capacity DB 62. The host computer 61 performs an information process for business management of the entire bank system and performs an information process for a service to a customer of the bank, for example, an update process of an account balance. The DB 62 stores balance information corresponding to the account number of the user of the bank.

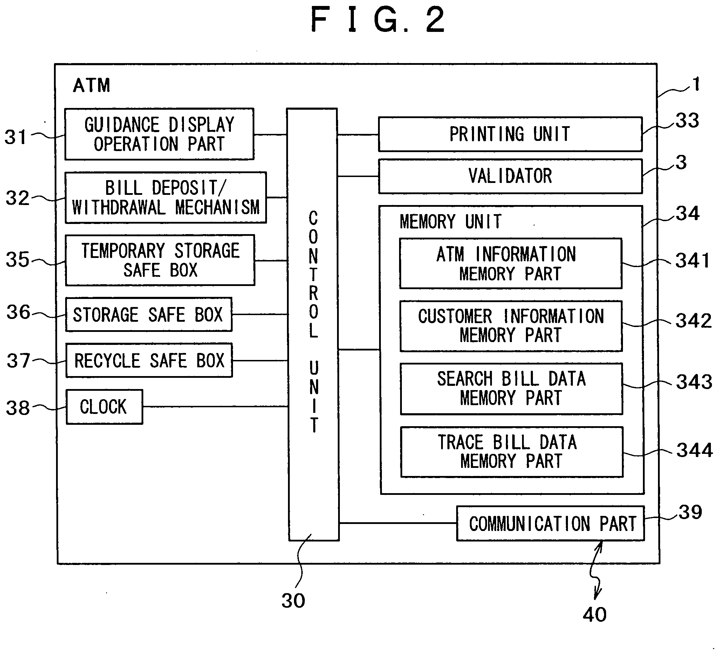

FIG. 2 is a block diagram of the ATM 1.

A control unit 30 has a processor, not shown, for controlling the entire ATM and controls units described below. A guidance display operation part 31 guides the operation of the user for ATM transaction and has, for example, a touch panel display device and an input part. A bill deposit/withdrawal mechanism 32 sets bills deposited or withdrawn into/from the ATM. A printing unit 33 prints transaction information on a printed medium such as a bankbook, a detailed statement or a receipt.

The validator 3 judges the size (length and breadth), the denomination and the genuineness of bills deposited. In the present invention, according to the result of judging, the later bill handling is different. Bill information extracted from the validator 3 is subject to a characteristic process.

A memory unit 34 stores transaction information and management information of the ATM 1. It has an ATM information memory part 341, a customer information memory part 342, a search bill data memory part 343 and a trace bill data memory part 344. The ATM information memory part 341 stores an ATM ID. The customer information memory part 342 stores transaction information of a customer. Being described later, the search bill data memory part 343 temporarily stores bill data extracted from the validator 3. The trace bill data memory part 344 stores bill data of bills to be traced.

A bill temporary storage safe box 35 temporality stacks bills validated by the validator 3 before being stacked in a storage safe box 36 or a recycle safe box 37. The recycle safe box 37 stacks bills validated as genuine bank notes by the validator 3 for recycling or reusing them for withdrawal. Typically, the ATM handles 1, 000-yen bills and 10 , 000-yen bills which are separately stacked in the recycle safe box 37. The storage safe box 36 is characteristic for this embodiment and stacks bills (categories 2, 3) judged as counterfeit bank notes orasdoubtfulbythevalidator3. This process will be described later in detail.

A clock 38 performs timekeeping of a date and time. The timekeeping result is printed on the detailed statement of transaction or is stored in the memory unit 34. The control unit 30 is connected via a communication part 39 to a network 40.

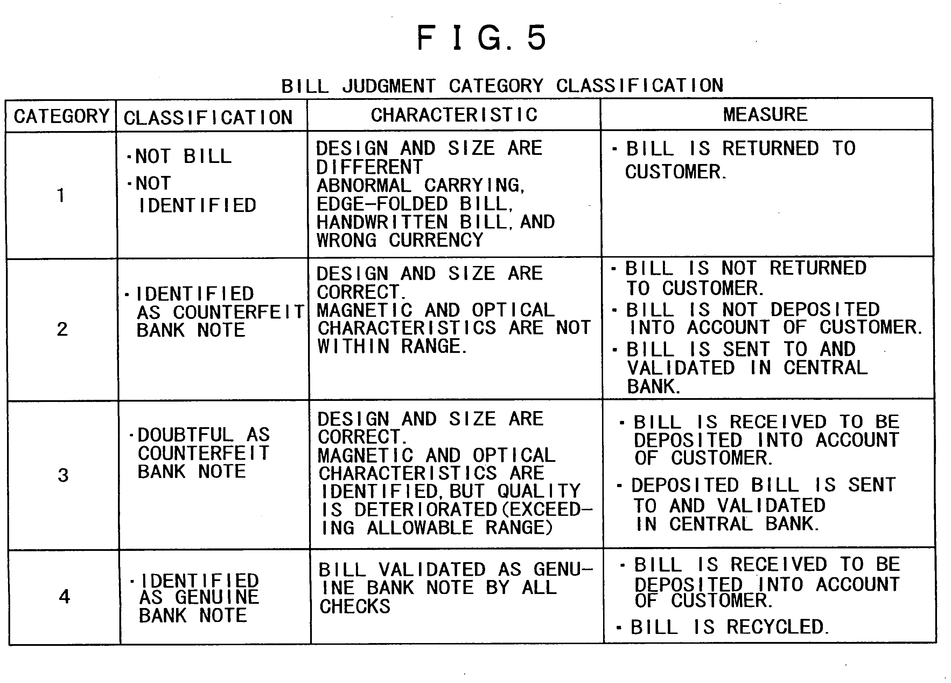

Bills a customer sets to the deposit/withdrawal bill setting part of the bill deposit/withdrawal mechanism 32 of the ATM 1 for deposit are carried to the validator 3 for judging the size, the denomination and the genuineness of the bills. As the result of judging, the bills are classified into four categories as shown in the table of FIG. 5.

### 1. Category 1: Not identified as a bill (mode 1)

The design and size are different. The bill is of the same size, but is damaged or folded. A folded ticket and a piece of paper are also included.

As a measure, the bill is carried to the bill deposit/withdrawal mechanism 32 to be returned to the customer.

### 2. Category 2: Identified as a counterfeit bank note (mode 2)

The results of judging the design and size are within the allowable range. The result of judging the denomination is within the allowable range. The magnetic and optical characteristics are not within the allowable range.

As a measure, the bill is not returned to the customer and is temporality stacked in the bill temporary storage safe box 35. The money amount of the bill is not deposited into the account of the customer and is reserved. The bill is sent to and validated in the central bank.

### 3. Category 3: Identified as doubtful as a counterfeit bank note (mode 3)

The design and size are correct (the results of judging the size and the denomination are within the allowable range), but the characteristics are judged as being outside the allowable range. For example, this may occur due to variation in performance (the sensors) of the validator and due to variation in printed design of the bill.

As a measure, the bill is received in the ATM 1 to be stacked in the bill temporary storage safe box 35. The money amount is deposited into the account of the customer. The doubtful bill is sent to and validated in the central bank.

When a bank clerk collects the bills in the categories 2 and 3, the temporary storage safe boxes in the categories 2 and 3 may be separate so as to easily classify both. 4. Category 4: Identified as a genuine bank note (mode 4)

The results of judging the size, the denomination and the genuineness are all within the allowable range.

As a measure, the bill is received and the money amount is deposited into the account of the customer. To reuse it, it is stacked in the bill recycle safe box 37.

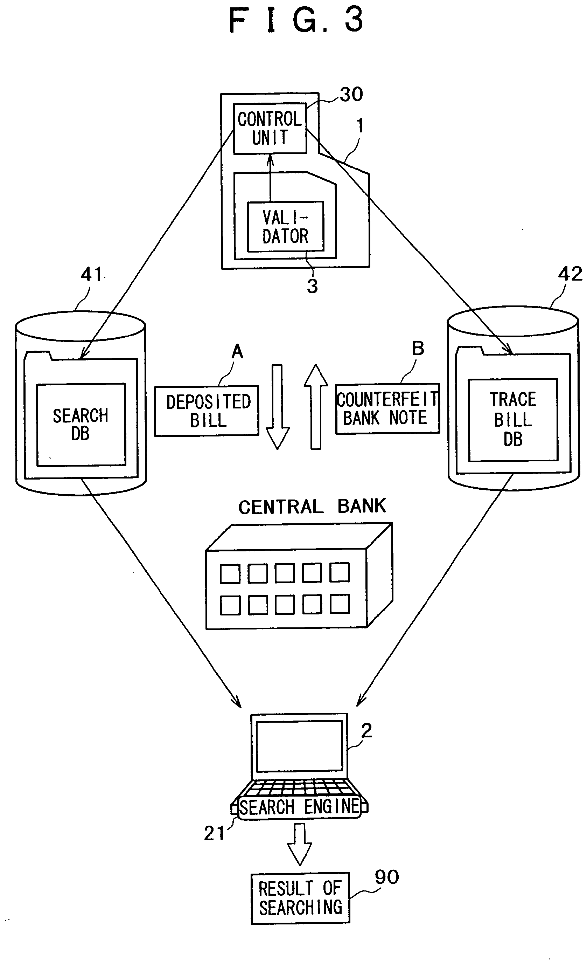

With reference to the schematic diagram of the bill data tracing system shown in FIG. 3, the validator 3 judges bills and classifies them into four categories and extracts necessary bill data from deposited bills to trace the user (depositor) of the ATM. The extracted bill data are temporarily stacked in the search bill data memory part 343 of the memory unit 34 under the control of the control unit 30. For a deposit process, transaction information (or deposited money amount) of the customer is stored in the customer information memory part 342 together with information specific to the customer, e.g. , the account number.

This embodiment has the bill information DB 4 in each of the branch offices. Information temporarily stored in the memory unit 34 in the ATM 1, particularly, the ATM information memory part 341, the customer information memory part 342, and the search bill data memory part 343 is gathered in the branch offices to be stored in the search DB 41 (a second storage mode) .

Bills A judged as being in the category 2 or 3 and stacked in the bill temporary storage safe box 35 must be validated in detail whether they are genuine bank notes or not. The bills A are sent to the central bank. The central bank validates the received doubtful bills A in detail. The result of validating including the target bills is returned to the bank. In this embodiment, bills B judged as counterfeit bank notes are used for tracing the depositing person.

In the bank, in order to use information on the returned bills B to extract data for tracing the user, the bank clerk deposits the bills B into the ATM 1 in which they have been initially deposited to obtain bill data from the result of validating. The reason why the validator 3 of the same ATM 1 extracts the bill data is that since the sensitivity of the sensor for bill validation is varied in each of the ATMs, it is preferable to perform the extraction in the ATM in which the bills have been initially handled.

The bill data extracted from the bills B in the validator 3 are temporarily stacked in the trace bill data memory part 344 in the ATM 1 and are transferred from the ATM 1 to be stored in the DB 42 (a first storage mode).

A terminal device 8 uses a search engine 21 functioning by the processing unit to search the search DB 41 for checking bill data 42' to be traced with bill data 41' stored in the search database 41, thereby detecting the bill data 41' matched with the bill data 42' to be traced. Consequently, a bill tracing result 90 is outputted from the terminal device 8. With reference to the result, the user who has deposited the bills B validated as counterfeit bank notes can be specified.

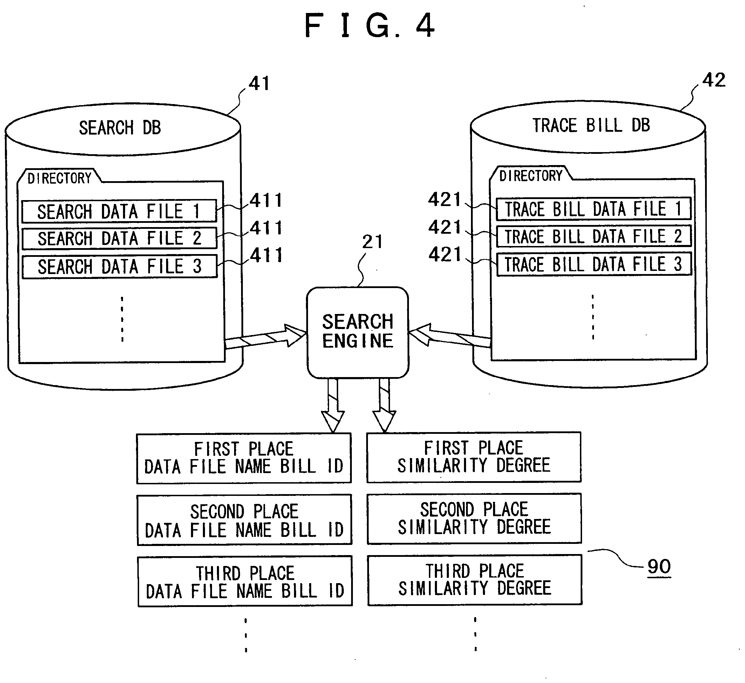

FIG. 4 is a diagram showing an example of the structure of the DB 4 for storing bill information in the bill tracing system and the process result 90 by the search engine 21.

The search DB 41 stores bill data extracted when the user deposits bills into the ATM as a search data file 411 together with transaction data (that is, deposited/withdrawn money amount and information specific to the user such as an account number). One search data file 411 may be for each deposit/withdrawal transaction of the user or may be for each bill transacted.

The trace bill data DB 42 stores bill data of bills of the user to be traced. The trace bill data is structured as one trace bill data file 421 for each extraction in which the validator 3 extracts image information of target bills from the result read from the optical or magnetic sensor. Bill data extracted by the carrying state (e.g., the carrying speed) of the bills of the validator 3 may be varied. Extraction of data of the same bill is preferably performed a plurality of times. This can be extracted by carrying the same bills in the validator 3 a plurality of times.

The extracted bill data file 421 is used for comparison and check with the bill data stored in the search DB 41. The dependence on the carrying state is reduced to trace bills. This is performed by searching the search DB 41 using the search engine 21 to sequentially compare and check the bill data 42' to be traced with a plurality of bill data 411 stored in the search DB 41. After the comparison and check, the similar bills are searched to be ordered by the match degree. The search data file name 411 and the bill ID of the search DB 41 are outputted to the display part, not shown, of the terminal device 2 or the printing part. Based on transaction information including personal identification information stored together with the bill data, the user who has deposited the bills can be specified. At the same time, the similarity degree (given a degree such as a similarity degree: 80%) is outputted. The similarity degree is a tracing accuracy validation reference.

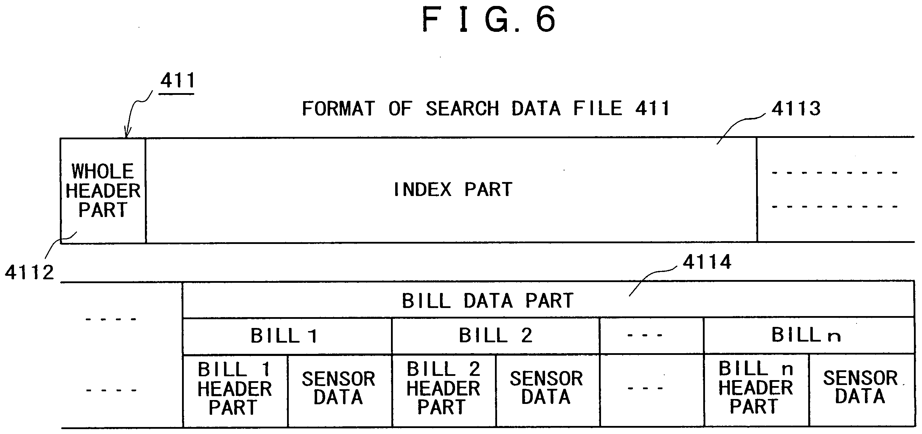

FIGS. 6 to 10 show structure examples of the search data file.

FIG. 6 shows the structure of the search data file.

In the example shown in FIG. 6, one search data file 411 is formed each time the user performs deposit transaction by the ATM to be stored in the DB 41.

One file has a whole header part 4112, an index part 4113 and a bill data part 4114. When a plurality of bills are deposited at the same time by one transaction, bill data per the plurality of bills is stored in the bill data part 4114.

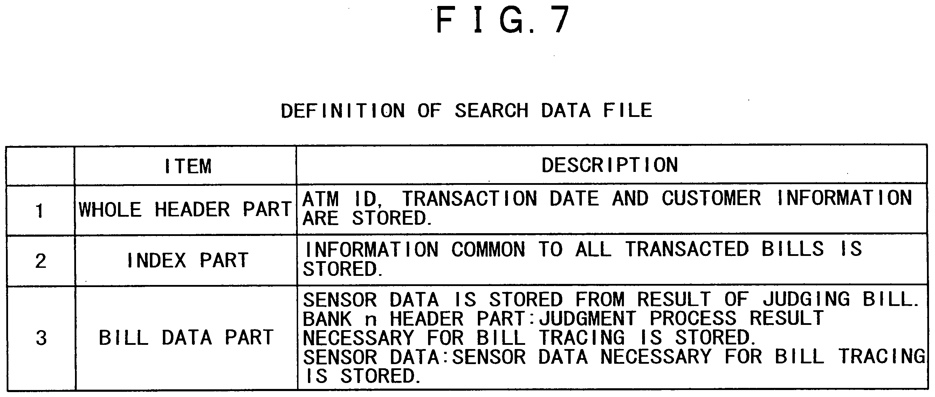

FIG. 7 shows the definition of the parts of the search data file.

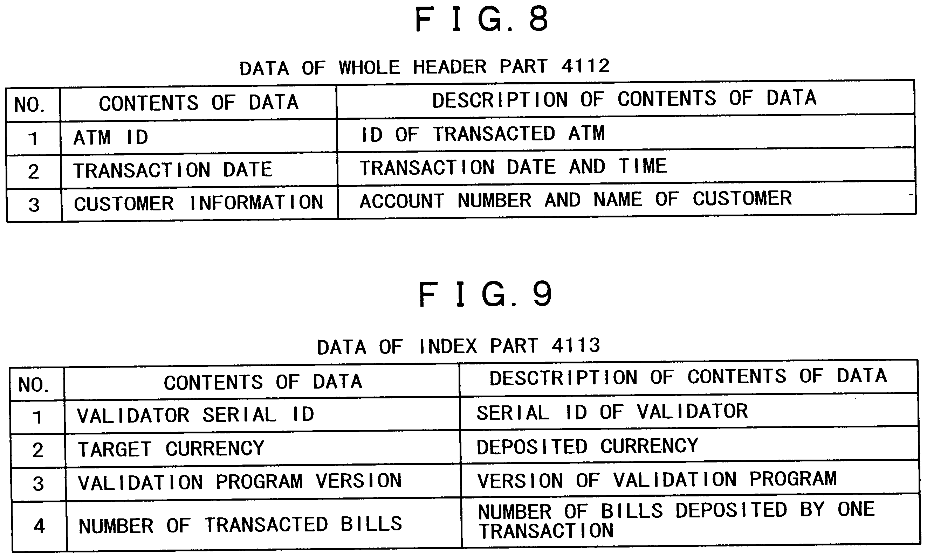

The whole head part 4112 of a file has an area storing an ATM ID, transaction date and customer information. As the detail is shown in FIG. 8, the ATM ID is an ID for identifying an ATM and indicates the ID of an ATM into which bills have been deposited. The transaction date is a transaction date and time. The customer information is the account number and name of a customer.

The index part 4113 is a part storing information common to all bills. As the detail is shown in FIG. 9, this part stores a serial ID as identification information of the validator 3, a currency to be deposited, the version of a validation program, and the number of bills deposited by one transaction.

When performing search by the search engine 21, bills to be traced selected from the trace bill DB 42 is compared and checked with bill data of search of the same currency. Information on the target currency is key data searching the target bill data. The contents of bill data may be different depending on the version of the validation program. The search engine 21 refers to version information of the validation program to perform a check process according to the version.

Information on the number of bills transacted is referred to find how many bill data are stored in the bill data part 4114. The serial ID of the validator is held in the memory in the validator 3.

The bill data part 4114 of FIG. 6 stores sensor information for each bill from the result of judging a bill obtained from the validator 3. Image information of a bill obtained by A/D converting a read signal from the read result of the bill by the optical sensor or the magnetic sensor is stored.

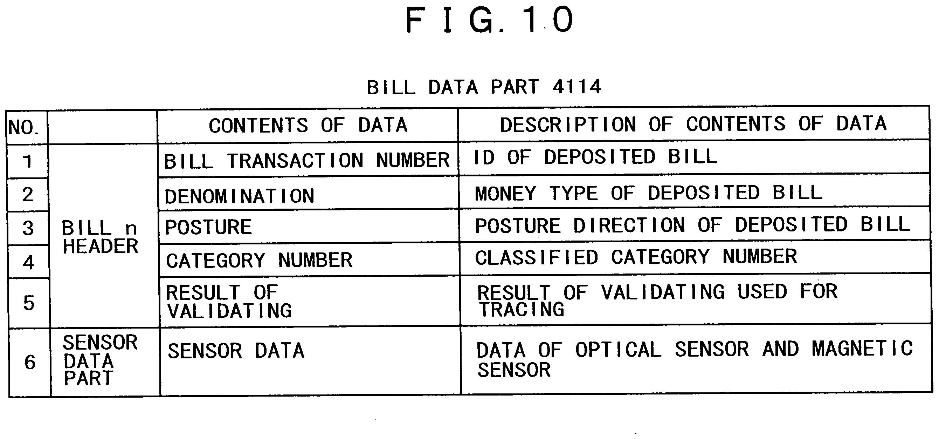

FIG. 10 shows the detailed contents of the bill data part 4114. The bill n header part stores a bill transaction number, denomination, posture, category numbers and result of validating. The bill transaction number is a bill ID indicating the deposit order when a plurality of bills are deposited at the same time into the ATM. The denomination is denomination information of deposited bills, and the posture is the posture direction of deposited bills. The category numbers are four classification numbers judged by the validator 3. The result of validating is a result judged by the validator 3, and the result of judging necessary for comparison and check of the search engine 21 is stored. The sensor data part stores data of the optical sensor or the magnetic sensor used by the search engine 21.

The structure of the trace bill data file 421 is the same as the form of the search data file 411. As compared with the search data file 411, information on the account number of a customer (FIGS. 6 to 10) is unnecessary.

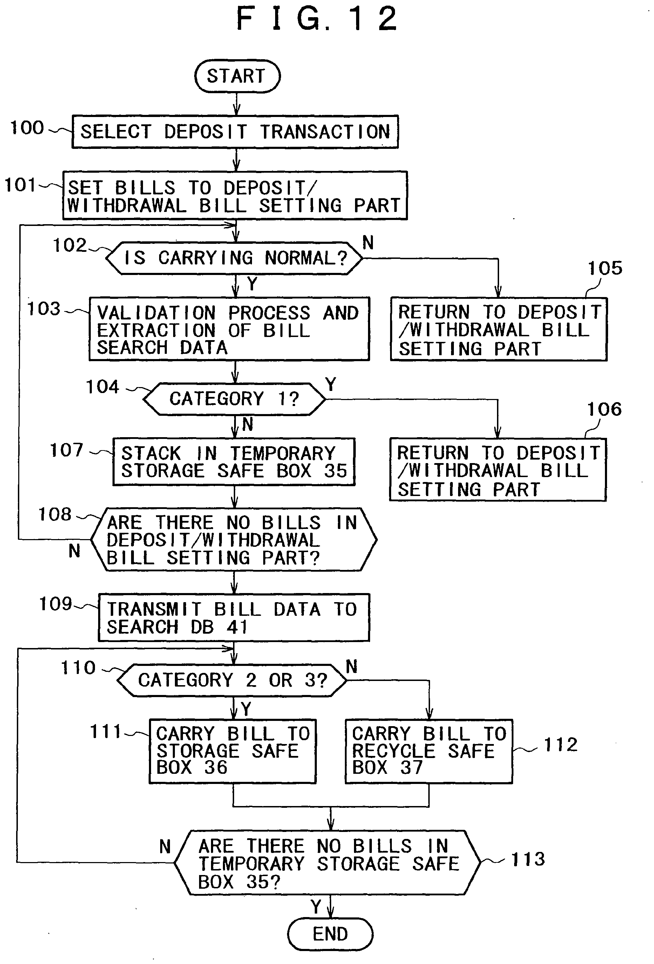

FIG. 12 is a flowchart of assistance in explaining a deposit process operation by the ATM according to an embodiment.

The user selects "deposit transaction" from the transaction items displayed on the guidance display operation part 31 of the ATM 1 (S100). When the user sets bills to the deposit/withdrawal bill setting part of the bill deposit/withdrawal mechanism 32 (S101), the bills are taken in one by one to be carried to the validator 3. The validator 3 judges the carrying state (S102). When the bills are carried in the state that the tilt of the bills is extremely large, the bills are carried on the end side of the carrying path exceeding the allowance range, or the overlapped bills are carried, the bills are returned to the deposit/withdrawal bill setting part (S105).

The correctly carried bills are subject to a validation process of the denomination and the genuineness by the validator 3. To trace the bills, search bill data are extracted (S103). After the validation process (S103) of the validator 3, the bills not identified as bills (category 1) are returned to the deposit/withdrawal bill setting part (S106). After the validation process, the bills judged as being in the categories 2, 3 and 4 are temporarily stacked in the temporary storage safe box 35 (S107). The above process operation is repeated until there are no bills in the deposit/withdrawal bill setting part (S102 to S108). The above process is repeated until there are no bills set to the deposit/withdrawal bill setting part (S108).

The bill data is once stored in the memory unit 34 in the ATM 1, that is, information on the money amount judged as genuine bank notes and the account number of the customer is stored in the customer information memory part 342. Bill data including the image of the bills is stored in the search bill data memory part 343. When obtaining of bill data from all bills deposited is ended, the bill data is transferred from the memory unit 34 of the ATM 1 via the network in the branch office to the search DB 41 together with related information shown in FIGS. 8, 9 and 10 and is stored in the DB 41 in the form shown in FIG. 6 (S109).

When the transmission of the bill search data is ended, the bills stacked in the temporary storage safe box 35 is carried to and stacked in the recycle safe box 37 or the storage safe box 36. In this case, the bills judged as being in the category 4 (genuine bank notes) are carried to and stacked in the recycle safe box 37 (S112). The bills judged as being in the category 2 or 3 are carried to and stacked in the storage safe box 36 (S111). When all the bills temporarily stacked in the temporary storage safe box 35 are stacked in the related storage safe boxes 36, 37, the deposit process is ended (S113).

When a series of deposit process of the customer is ended, deposit data stored in the memory unit 34 is transmitted via the network 50 to the main office 60 together with customer information. The account balance of the DB 62 is updated under the process of the host computer 61.

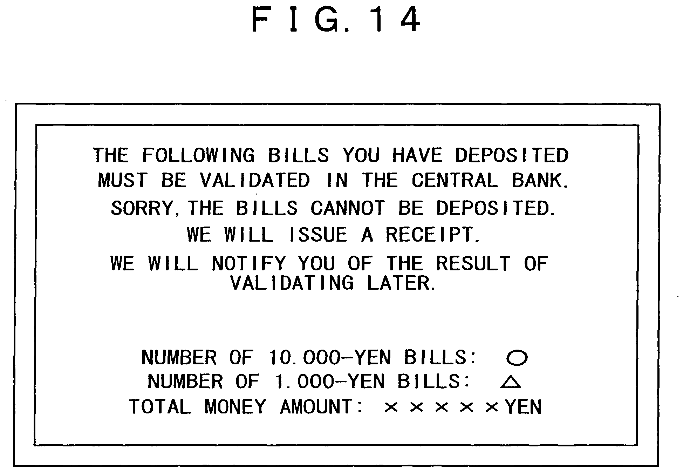

FIG. 14 shows a display example of display guidance of the ATM about handling of illegal bills in the deposit process. That is, it is a display example of the guidance display operation part 31 when deposited bills are judged as being in the category 2 by the validator 3. Since the bills judged as being in the category 2 are not deposited in the account of the customer, a message that "The bills you have deposited must be validated in the central bank. Sorry, but the bills cannot be deposited. We'll issue a receipt. We'll notify you of the result of validating later." is displayed as guidance.

The denomination of the bill judged as being in the category 2, the number of the bills and the total money amount are also displayed. The display is performed when all the bills set to the deposit/withdrawal bill setting part are validated and bill data to the customer is transmitted to the search DB 41 (FIG. 12, S109). In this stage, the number of genuine bank notes and the number of bills in the category 2 or 3 are found with reference to data in the memory unit 3. The control unit 30 can easily perform control to calculate and display the number of them and total money amount.

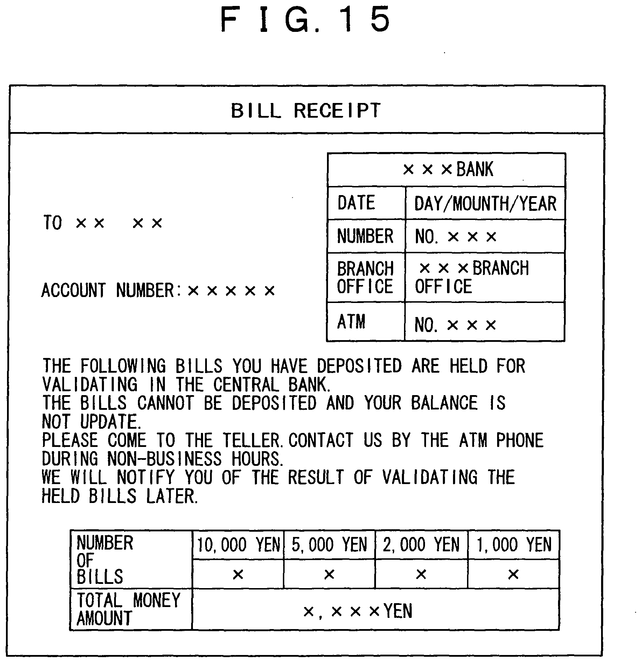

A bill receipt as shown in FIG. 15 is issued to the customer taken measures according to the display of FIG. 14.

This transmits information obtained from the memory unit 34 for the display of FIG. 14 to the guidance display operation part 31 and also transmits it to the printing unit 33. The printing unit 33 prints the guidance and money amount as shown in FIG. 15 on the bill receipt to issue it from the ATM 1 to the customer.

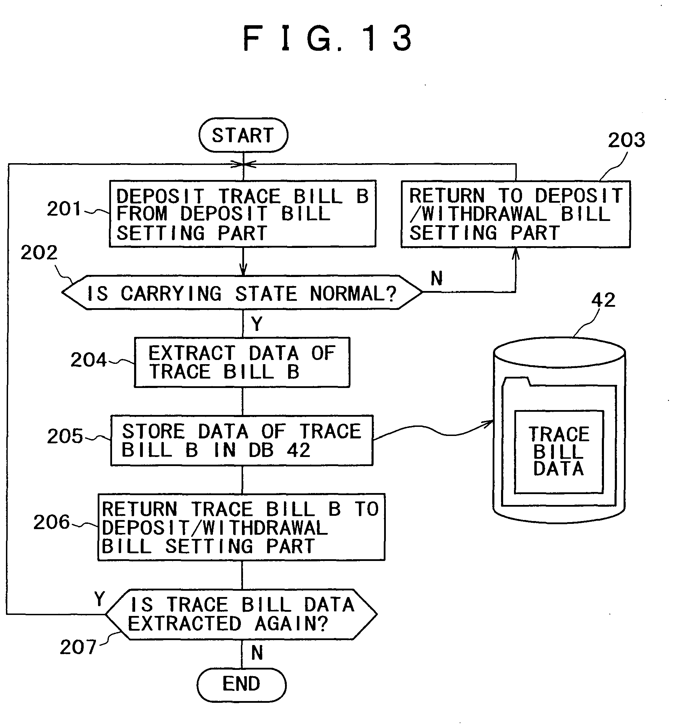

FIG. 13 is a flowchart showing an operation when extracting bill data for tracing the user.

Bills corresponding to the categories 2 and 3 stacked in the storage safe box 36 are validated in detail by the central bank. After the validation, the bills B judged as "counterfeit bank notes" are returned to the bank. To trace the person depositing the same bills as the returned bills B, the bank deposits the bills B into the initially validated ATM 1 to extract bill data for tracing by the validator 3.

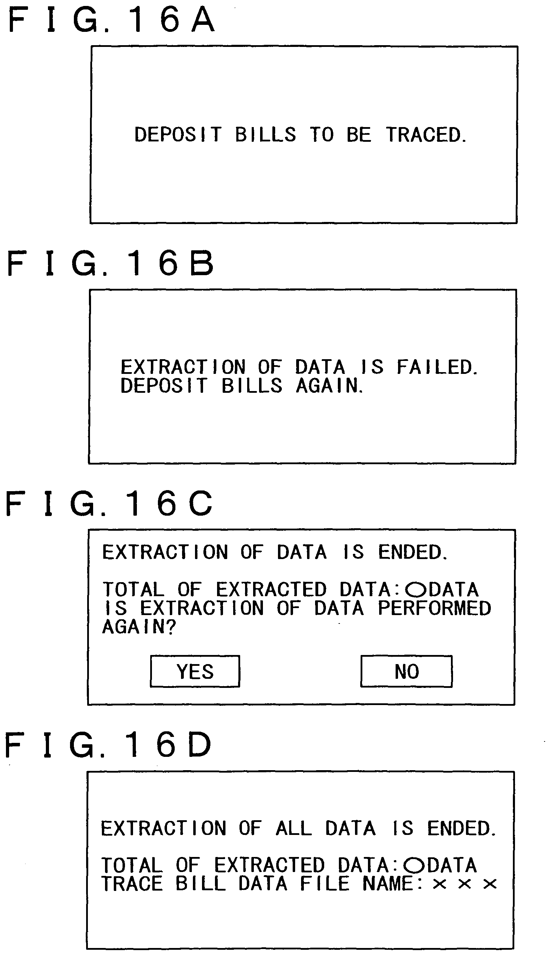

When performing the process operation of FIG. 13, the guidance display of FIG. 16 is displayed. FIG. 16 is an example of guidance displayed on the screen of the guidance display operation part 31 of the ATM 1 when extracting bill data.

According to guidance of FIG. 16A that "Deposit bills to be traced. ", the bank clerk deposits the bills B to be traced into the deposit/withdrawal bill setting part (S201). The bills are carried from the deposit/withdrawal bill setting part to the validator 3. The validator 3 checks the carrying state of the tilt of the carried bills (S202). When the tilt of the bills is larger than a predetermined value, they are rejected to be returned to the deposit/withdrawal bill setting part (S203). In this case, guidance display of FIG. 16B that "Extraction of data is failed. Deposit the bills again." is performed to prompt to deposit the bills B again from the deposit/withdrawal bill setting part.

When the bills are normally carried, the validator 3 extracts bill data for tracing (S204). The trace bill data is stored in the trace DB 42 (S205). When the storage process is ended, the bills B are returned to the deposit/withdrawal bill setting part (S206). The display screen displays a message that extraction of data is ended, as shown in FIG. 16C, and displays the total of the number of the extracted data. Whether extraction of data is performed again is inquired (S207). When the bills B are left in the hand of the clerk and bill data must be extracted, or when bill data of the same bills B must be obtained again, "YES" is operated. When ending the extraction of bill data, "NO" is operated.

When "YES" is selected, S201 to S207 are repeated. When "NO" is selected, as shown in FIG. 16D, a message that extraction of all bill data is ended is displayed. The total of the extracted data and the data file name of the trace bill stored in the trace DB 42 are displayed. Any data file name can be given by inputting from the guidance display operation part 31 by the clerk.

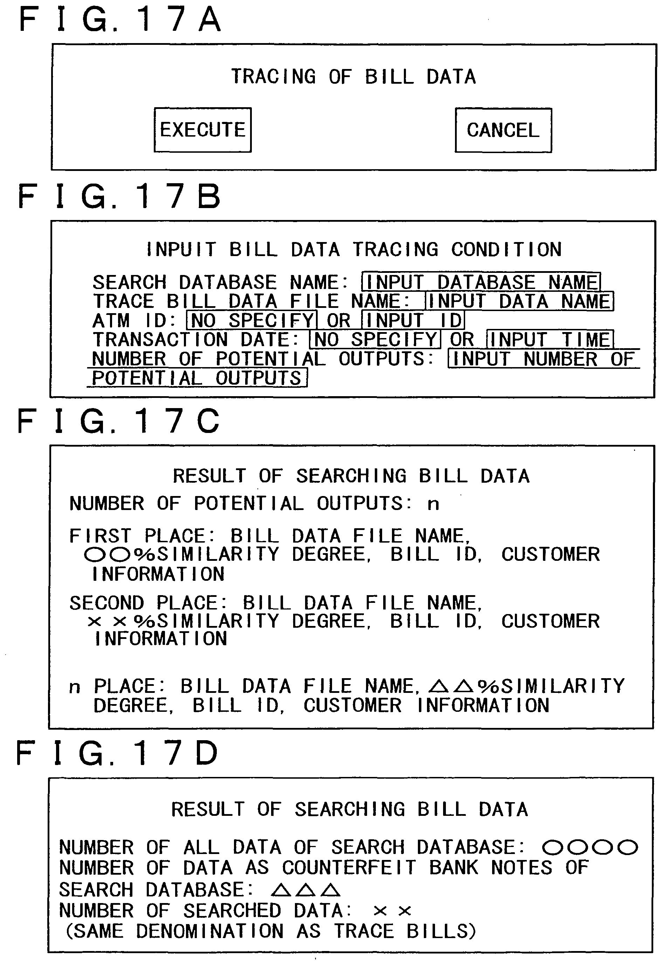

FIG. 17 is a diagram showing an example of display guidance in the terminal device when executing the search engine 21 for tracing the user.

When starting the search engine 21, the display screen displays guidance inquiring the tracing of bill data, as shown in FIG. 17A. When tracing the bill data, "Execute" is selected. When not tracing it, "Cancel" is selected.

When the execution of the tracing of the bill data is selected, as shown in FIG. 17B, a screen inputting a bill data tracing condition is displayed. To select the target search DB, the name of the search DB 41 is inputted. In this embodiment, the search DB 41 exists in each of the branch offices 10, and the terminal device 2 performing a search operation also exists in each of the branch offices. The search DB 41 in the branch office 10 may be selected. In an alternative example, the DB 41 in another branch office can also be specified.

When selecting the search DB 41, the name of the search DB 41 may be inputted from a keyboard. Alternatively, the names of all the search DBs 41 may be displayed on the display screen to specify the target DB 41.

The name of the bill data file 421 of bills to be traced is inputted. All the trace bill data file names may be displayed on the screen to specify and input the target data file name.

The ATM to be searched is specified by specifying the ATM ID as identification information of the ATM. When the ATM in which the bills B as counterfeit bank notes are deposited by the user is previously found, its ATM ID is inputted. When the ATM in which the bills B have been handled is not found, or when all the ATMs are targeted, "No specify" is inputted.

When specifying the ATM ID, only bill data deposited into the specified ATM is targeted and searched.

When the transaction date of bills to be traced which have been deposited by the user is previously found, the transaction date is inputted. When it is not found, "No specify" is inputted. When specifying the transaction date, only bill data deposited on the specified transaction date is targeted and searched from the data file stored in the search DB 41. For the input of the transaction date, when only the year of the deposit date is found, only the year may be inputted, and when only the month is found, only the month may be inputted. The number of potential outputs is inputted. The maximum number of potential outputs is specified.

When necessary items are inputted on screen (B) to specify search execution, the search engine 21 searches the specified search DB 41 under the specified condition. After the search, bill data similar to the trace bill data B is extracted.

FIGS. 17C and 17D are screen display examples showing the search execution results of bill data. The results of tracing the specified number of potential outputs are displayed in order of decreasing similarity degree to the trace bill data B. The similarity degree indicating the match degree, the bill ID and customer information are extracted from the target data file stored in the search DB 41 together with their names and are displayed on the screen. As shown in FIG. 17D, the number of all bill data in the search DB 41, the number of bill data validated as being in the category 2 or 3, and the number of searched bill data, that is, the number of bill data of the same denomination as the trace bill are displayed.

After the search process, the customer can be specified from the account number of the customer who has deposited the bills to be traced and having a high similarity degree. After that, the bank may contact a criminal investigation organization.

An embodiment is described above. The present invention is not limited to the above embodiment and various modifications can be made and embodied.

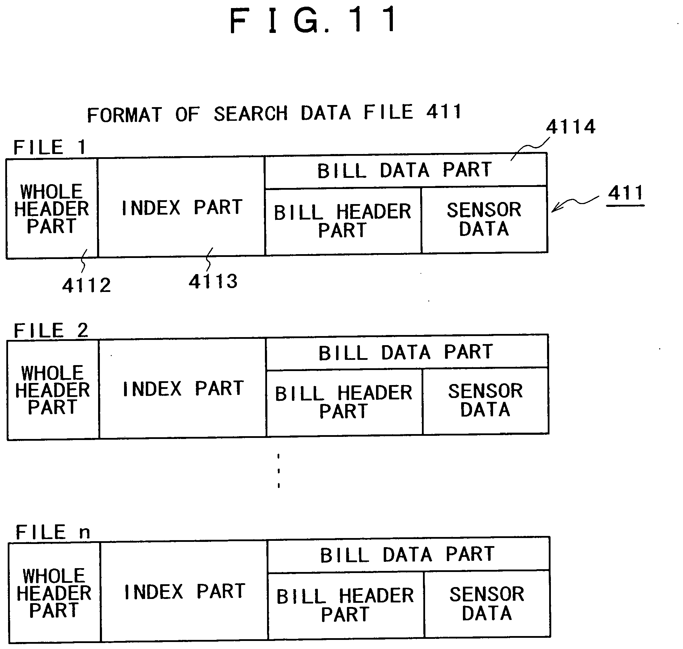

The file of bill data stored in the search DB 41 can be formed as shown in FIG. 11. This example is an example in which one file is formed for each deposited bill to be stored in the search DB 41.

The contents of the whole header part 4112, the index part 4113 and the bill data part 4114 consisting of one file are the same as those shown in FIGS. 8 and 10. Since one file is stored for each bill, information on the number of transacted bills of the index part 4113 and the bill transaction number of the bill n header part is unnecessary.

As an alternative example of the deposit process operation of the ATM, the transmission step (S109) of bill data to the search DB 41 in the flowchart shown in FIG. 12 can be changed.

In FIG. 12, after the data process of all the deposited bills is ended, bill data of all the bills is transmitted together to and stored in the search DB 41 (S109). In a modification example, bill data extracted by the validator 3 for each depositing bill may be transmitted to the search DB 41.

This can be changed by moving the transmission (S109) of bill data to the search DB 41 in the flowchart of FIG. 12 between S104 and S107. In this case, bill data extracted from each bill is formed as in the format shown in FIG. 11 to be stored in the search DB 41.

As another modification example, a location having the search DB 41 can be variously modified.

In the embodiment shown in FIG. 1, the search DB 41 is provided in each of the branch offices. The DB 41 may be provided in each of the ATMs 1. All the search DBs 41 may be integrated to be provided in the DB 62 of the main office 60. As a further modification, without considering the boundary between the branch office and the main office, the DB 41 may be provided to be common to a plurality of ATMs in each area.

The trace DB 42 may be variously modified and provided as in the above search DB 41. The trace DB 42 is not provided in the same storage device as the search DB 41 or is not provided in the same location, and may be separated from the search DB 41 to be provided in the DB 62 in the main office 60, thereby being shared to be accessed from all the search DBs 41.

Extracting trace bill data from the bills B returned from the central bank is performed by depositing them into the initial ATM in the above embodiment.

### Another embodiment:

Other that the above, the followings will be listed.
(1) A bill information process system in which the whole header part of the file stores information on a date on which the user uses an ATM, the ID of the used ATM, and data including the account number of the user, the index part stores the ID of the validator, the target currency, and data about the number of transacted bills, and the bill data part stores the IDs of the bills obtained from the validator and image information of the bills obtained from the sensor.
(2) A bill information process system which specifies the ATM in which bills validated as counterfeit bank notes by the central bank are handled with reference to the storage device, deposits the bills into the specified ATM, and validates the bills by the validator to obtain information on the bills.
(3) A bill process method using the account number of the user as information specific to the user.
(4) A bill transaction system in which the second DB is provided in the ATM and the computer is provided in the center system.
(5) A bill transaction system in which the display means displays a plurality of candidates of the check result of bill information in order of decreasing similarity degree.
(6) A system in which the computer has a search engine.

According to the present invention, for bills judged as counterfeit bank notes by the validator, bill information necessary for tracing the user is obtained to be stored in the storage device.

The held bill information is checked with bill information extracted by normal deposit transaction to be stacked in the storage device to specify the user who has used the bills.

## Claims

1. A bill transaction system for tracing counterfeit bank notes including an ATM (1) for deposition of bank notes by a user, a tracing terminal device (2) including a search engine (21) for tracing a user who deposited a counterfeit bank note, and a database (4),
- said ATM comprising a validator (3) including an optical sensor and optionally magnetic sensor to obtain optical and optionally magnetic characteristics of bank notes deposited in said ATM, said validator being configured to judge bank notes deposited in the ATM (1) as genuine bank notes or counterfeit bank notes or doubtful banknotes by determining whether or not the optical and optionally magnetic characteristic of the banknote is within an allowable range, and to judge a denomination of said bank notes deposited in said ATM;
- a storage safe box (36) for stacking bank notes deposited in said ATM and judged as counterfeit bank notes or as doubtful by the validator (3) to separate and hold bank notes which have been judged as counterfeit bank notes or as doubtful by the validator (3);
- said database (4) including a search database (41) for storing, for a plurality of doubtful and counterfeit bank notes deposited in said ATM, as a search data set of a deposited doubtful or counterfeit bank note, an optical characteristic of said deposited bank note obtained by the optical sensor of the validator (3) together with information specific to the user when the respective banknote is deposited in said ATM for a first time by a user;
- said database (4) further comprising a trace database (42) for storing, as a trace data set of one of said doubtful bank notes, after it had been verified as being a counterfeit bank note at a center outside the ATM, or one of said counterfeit bank notes, an optical characteristic obtained by the optical sensor of the validator (3) from said one bank note, which had already been deposited for a first time in said ATM, and for which search data set exists in said search database, after said one bank note is deposited in said same ATM for a second time,
wherein said search engine (21) is configured to compare a trace data set of a specific bank note stored in said trace database (42) with a plurality of search data sets stored in said search database (41) to determine a degree of similarity of an optical characteristic of said bank note stored in said trace data set with an optical characteristic of a bank note stored in one of said search data sets to re-identify a specific bank note, which had been deposited in said ATM already at a first time and which has been judged by the validator as a doubtful or a counterfeit bank note, and to trace a user based on the resulting degree of similarity by retrieving an information specific to a user from the search data set with the highest degree of similarity.

2. The bill transaction system according to claim 1, wherein the search database (41) stores optical and optionally magnetic characteristics of said doubtful or said counterfeit bank note together with information on an ID specific to the ATM and the time at which the bank notes are transacted.

3. The bill transaction system according to claim 1, wherein the search database (41) stores optical and optionally magnetic characteristics of said doubtful or said counterfeit bank note together with an ID specific to the validator (3) and a version of a validation program.

4. The bill transaction system according to claim 1, wherein the ATM has a display operation part having a display operation screen guiding an operation, the display operation part displaying guidance about an operation for obtaining the optical and optionally magnetic characteristics of said doubtful or said counterfeit bank note of the trace database (42) from bank notes for tracing the user.

5. The bill transaction system according to claim 1, wherein the ATM, after the judgement of the validator (3), when there are bank notes stacked in the storage safe box, has a display operation part displaying a message that counterfeit bank notes cannot be deposited.

6. The bill transaction system according to claim 1, wherein the ATM, after the judgement of the validator (3), when there are bank notes stacked in the storage safe box, has printing means for printing on a printed medium a message that doubtful bank notes must be inspected by a central bank to issue the medium as a receipt to the user of the bank notes.

7. The bill transaction system according to claim 1, wherein the search database (41) and the trace database (42) are formed in different areas of the same database (4).

8. A bill information processing method using a bill transaction system including an ATM (1) for deposition of bank notes by a user, comprising the steps of:
- obtaining optical and optionally magnetic characteristics of bank notes deposited in said ATM using an optical and optionally magnetic sensor,
- judging bank notes deposited in said ATM (1) as genuine bank notes or counterfeit bank notes or doubtful banknotes by determining whether or not the obtained optical and optionally magnetic characteristic of the banknote obtained is within an allowable range,
- judging a denomination of said bank notes deposited in said ATM;
- stacking bank notes in a storage safe box (36) which were deposited in said ATM and judged as counterfeit bank notes or as doubtful by the validator (3) for separating and holding bank notes which have been judged as counterfeit bank notes or as doubtful;
- storing in a search database (41) included in said database (4), for a plurality of doubtful and counterfeit bank notes deposited in said ATM, a search data set of a deposited doubtful or counterfeit bank note, an optical characteristic of said deposited bank note obtained by the optical sensor of the validator (3) together with information specific to the user when the respective banknote is deposited in said ATM for a first time by a user;
- storing in a trace database (42) included in said database (4), a trace data set of one of said doubtful bank notes, after it had been verified as being a counterfeit bank note at a center outside the ATM, or one of said counterfeit bank notes, an optical characteristic obtained by the optical sensor of the validator (3) from said one bank note, which had already been deposited for a first time in said ATM, and for which search data set exists in said search database, after said one bank note is deposited in said same ATM for a second time;
- comparing a trace data set of a specific bank note stored in said trace database (42) with a plurality of search data sets stored in said search database (41) by said search engine (21), and determining a degree of similarity of an optical characteristic of said bank note stored in said trace data set with an optical characteristic of a bank note stored in one of said search data sets to re-identify a specific bank note, which had been deposited in said ATM already at a first time and which has been judged as a doubtful or a counterfeit bank note; and
- tracing a user based on the resulting degree of similarity by retrieving an information specific to a user from the search data set with the highest degree of similarity.

9. The bill information process method according to claim 8, further comprising a step of displaying, on a display screen, for bank notes judged as counterfeit bank notes or as doubtful by the validator (3), a message that the bank notes are held by the bank for inspection.

10. The bill transaction system according to claim 1, wherein the search database (41) and the trace database (42) are provided in the ATM and the search engine (21) is included in a personal computer provided in a branch office system.

11. The bill transaction system according to claim 10, wherein the search database (41) and the trace database (42) and the computer are provided in each branch office system.

12. The bill transaction system according to claim 11, wherein the computer has input means for inputting a condition for searching the search database (41) into the search engine (21) about bank notes to be traced and a display for displaying the search condition and the result of comparison of said trace data set of a specific bank note stored in said trace database (42) with said plurality of search data sets stored in said search database (41).

## Patentansprüche

1. Geldscheinübermittlungssystem zum Nachverfolgen gefälschter Banknoten, das einen Geldautomaten (1) zum Einzahlen von Banknoten durch einen Anwender, eine Nachverfolgungsendgerätevorrichtung (2), die eine Suchmaschine (21) zum Nachverfolgen eines Anwenders, der eine gefälschte Banknote eingezahlt hat, enthält, und eine Datenbank (4) enthält,
- wobei der Geldautomat eine Validierungseinrichtung (3) umfasst, die einen optischen Sensor und wahlweise einen magnetischen Sensor enthält, um optische und wahlweise magnetische Eigenschaften der Banknoten zu ermitteln, die in den Geldautomaten eingezahlt werden, wobei die Validierungseinrichtung konfiguriert ist, die in den Geldautomaten (1) eingezahlten Banknoten durch Bestimmen, ob die optischen und wahlweise die magnetischen Eigenschaften der Banknote innerhalb eines zulässigen Bereichs liegen oder nicht, als echte Banknoten oder als gefälschte Banknoten oder als zweifelhafte Banknoten zu beurteilen und eine Bezeichnung der in den Geldautomaten eingezahlten Banknoten zu beurteilen;
- einen Aufbewahrungssicherheitsbehälter (36) zum Stapeln der Banknoten, die in den Geldautomaten eingezahlt und durch die Validierungseinrichtung (3) als gefälschte Banknoten oder als zweifelhaft beurteilt werden, um die Banknoten, die durch die Validierungseinrichtung (3) als gefälschte Banknoten oder als zweifelhaft beurteilt werden, abzusondern und einzubehalten;
- wobei die Datenbank (4) eine Suchdatenbank (41) zum Speichern einer optischen Eigenschaft der eingezahlten Banknote, die durch den optischen Sensor der Validierungseinrichtung (3) ermittelt wird, zusammen mit Informationen, die für den Anwender spezifisch sind, als einen Suchdatensatz einer eingezahlten, zweifelhaften oder gefälschten Banknote, wenn die betreffende Banknote ein erstes Mal durch einen Anwender in den Geldautomaten eingezahlt wird, für mehrere zweifelhafte und gefälschte Banknoten, die in den Geldautomaten eingezahlt werden, umfasst;
- wobei die Datenbank (4) ferner eine Nachverfolgungsdatenbank (42) zum Speichern einer optischen Eigenschaft, die durch den optischen Sensor der Validierungseinrichtung (3) aus der einen Banknote ermittelt wird, die bereits ein erstes Mal in den Geldautomaten eingezahlt wurde und für die in der Suchdatenbank Suchdaten existieren, als einen Nachverfolgungsdatensatz einer der zweifelhaften Banknoten, nachdem sie in einem Zentrum außerhalb des Geldautomaten als eine gefälschte Banknote erkannt wurde, oder einer der gefälschten Banknoten, nachdem die eine Banknote ein zweites Mal in denselben Geldautomaten eingezahlt wurde, umfasst,
wobei die Suchmaschine (21) konfiguriert ist, einen Nachverfolgungsdatensatz einer bestimmten Banknote, der in der Nachverfolgungsdatenbank (42) gespeichert ist, mit mehreren Suchdatensätzen, die in der Suchdatenbank (41) gespeichert sind, zu vergleichen, um einen Übereinstimmungsgrad einer optischen Eigenschaft der Banknote, die im Nachverfolgungsdatensatz gespeichert ist, mit einer optischen Eigenschaft einer Banknote, die in einem der Suchdatensätze gespeichert ist, zu bestimmen, um eine bestimmte Banknote wiederzuerkennen, die bereits ein erstes Mal in den Geldautomaten eingezahlt wurde und die durch die Validierungseinrichtung als eine zweifelhafte oder als eine gefälschte Banknote beurteilt wurde, und auf der Basis des resultierenden Übereinstimmungsgrads durch Abrufen von Informationen, die für einen Anwender spezifisch sind, aus dem Suchdatensatz mit dem höchsten Übereinstimmungsgrad einen Anwender nachzuverfolgen.

2. Geldscheinübermittlungssystem nach Anspruch 1, wobei die Suchdatenbank (41) optische und wahlweise magnetische Eigenschaften der zweifelhaften oder der gefälschten Banknote zusammen mit Informationen über eine Kennung, die für den Geldautomaten spezifisch ist, und mit der Zeit, zu der die Banknoten übermittelt wurden, speichert.

3. Geldscheinübermittlungssystem nach Anspruch 1, wobei die Suchdatenbank (41) optische und wahlweise magnetische Eigenschaften der zweifelhaften oder der gefälschten Banknote zusammen mit einer Kennung, die für die Validierungseinrichtung (3) spezifisch ist, und mit einer Version eines Validierungsprogramms speichert.

4. Geldscheinübermittlungssystem nach Anspruch 1, wobei der Geldautomat eine Anzeigenbedienkomponente aufweist, die einen Anzeigenbedienbildschirm aufweist, der einen Vorgang anleitet, wobei die Anzeigenbedienkomponente eine Anleitung über einen Vorgang zum Ermitteln der optischen und wahlweise der magnetischen Eigenschaften der zweifelhaften oder der gefälschten Banknote der Nachverfolgungsdatenbank (42) aus den Banknoten zum Nachverfolgen des Anwenders anzeigt.

5. Geldscheinübermittlungssystem nach Anspruch 1, wobei der Geldautomat nach der Beurteilung der Validierungseinrichtung (3) dann, wenn Banknoten im Aufbewahrungssicherheitsbehälter gestapelt sind, eine Anzeigenbedienkomponente aufweist, die eine Meldung anzeigt, dass gefälschte Banknoten nicht eingezahlt werden können.

6. Geldscheinübermittlungssystem nach Anspruch 1, wobei der Geldautomat nach der Beurteilung der Validierungseinrichtung (3) dann, wenn Banknoten im Aufbewahrungssicherheitsbehälter gestapelt sind, Druckmittel zum Drucken einer Meldung, dass zweifelhafte Banknoten durch eine zentrale Bank geprüft werden müssen, auf ein Druckmedium aufweist, um das Medium als Beleg an den Anwender der Banknoten auszugeben.

7. Geldscheinübermittlungssystem nach Anspruch 1, wobei die Suchdatenbank (41) und die Nachverfolgungsdatenbank (42) in verschiedenen Bereichen derselben Datenbank (4) gebildet sind.

8. Geldscheininformationsverarbeitungsverfahren, das ein Geldscheinübermittlungssystem verwendet, das einen Geldautomaten (1) zum Einzahlen von Banknoten durch einen Anwender enthält, das die folgenden Schritte umfasst:
- Ermitteln von optischen und wahlweise magnetischen Eigenschaften der Banknoten, die in den Geldautomaten eingezahlt werden, unter Verwendung eines optischen und wahlweise eines magnetischen Sensors;
- Beurteilen der in den Geldautomaten (1) eingezahlten Banknoten als echte Banknoten oder als gefälschte Banknoten oder als zweifelhafte Banknoten durch Bestimmen, ob die ermittelten, optischen und wahlweise magnetischen Eigenschaften der Banknote innerhalb eines zulässigen Bereichs liegen oder nicht;
- Beurteilen einer Bezeichnung der in den Geldautomaten eingezahlten Banknoten;
- Stapeln der Banknoten in einem Aufbewahrungssicherheitsbehälter (36), die in den Geldautomaten eingezahlt und durch die Validierungseinrichtung (3) als gefälschte Banknoten oder als zweifelhaft beurteilt werden, zum Aussondern und Einbehalten der Banknoten, die als gefälschte Banknoten oder als zweifelhaft beurteilt werden;
- Speichern in einer Suchdatenbank (41), die in der Datenbank (4) enthalten ist, eines Suchdatensatzes einer eingezahlten, zweifelhaften oder gefälschten Banknote, einer optische Eigenschaft der eingezahlten Banknote, die durch den optischen Sensor der Validierungseinrichtung (3) ermittelt wird, zusammen mit Informationen, die für den Anwender spezifisch sind, wenn die betreffende Banknote ein erstes Mal durch einen Anwender in den Geldautomaten eingezahlt wird, für mehrere zweifelhafte und gefälschte Banknoten, die in den Geldautomaten eingezahlt werden;
- Speichern in einer Nachverfolgungsdatenbank (42), die in der Datenbank (4) enthalten ist, eines Nachverfolgungsdatensatzes einer der zweifelhaften Banknoten, nachdem sie in einem Zentrum außerhalb des Geldautomaten als gefälschte Banknote erkannt wurde, oder einer der gefälschten Banknoten, einer optischen Eigenschaft, die durch den optischen Sensor der Validierungseinrichtung (3) aus der Banknote ermittelt wird, die bereits ein erstes Mal in den Geldautomaten eingezahlt wurde und für die in der Suchdatenbank ein Suchdatensatz existiert, nachdem die eine Banknote ein zweites Mal in denselben Geldautomaten eingezahlt wurde;
- Vergleichen eines Nachverfolgungsdatensatzes einer bestimmten Banknote, der in der Nachverfolgungsdatenbank (42) gespeichert ist, mit mehreren Suchdatensätzen, die in der Suchdatenbank (41) gespeichert sind, durch die Suchmaschine (21) und Bestimmen eines Übereinstimmungsgrads einer optischen Eigenschaft der Banknote, die in dem Nachverfolgungsdatensatz gespeichert ist, mit einer optischen Eigenschaft einer Banknote, die in einem der Suchdatensätze gespeichert ist, um eine bestimmte Banknote wiederzuerkennen, die bereits ein erstes Mal in den Geldautomaten eingezahlt wurde und die als eine zweifelhafte oder als eine gefälschte Banknote beurteilt wurde; und
- Nachverfolgen eines Anwenders auf der Basis des resultierenden Übereinstimmungsgrads durch Abrufen von Informationen, die für einen Anwender spezifisch sind, aus dem Suchdatensatz mit dem höchsten Übereinstimmungsgrad.

9. Geldscheininformationsverarbeitungsverfahren nach Anspruch 8, das ferner einen Schritt des Anzeigens einer Meldung, dass die Banknoten durch die Bank zur Prüfung einbehalten werden, auf einem Anzeigebildschirm für Banknoten, die durch die Validierungseinrichtung (3) als gefälschte Banknoten oder als zweifelhaft beurteilt werden, umfasst.

10. Geldscheinübermittlungssystem nach Anspruch 1, wobei die Suchdatenbank (41) und die Nachverfolgungsdatenbank (42) im Geldautomaten vorgesehen sind und die Suchmaschine (21) in einem Personalcomputer enthalten ist, der in einem Zweigbürosystem vorgesehen ist.

11. Geldscheinübermittlungssystem nach Anspruch 10, wobei die Suchdatenbank (41) und die Nachverfolgungsdatenbank (42) und der Computer in jedem Zweigbürosystem vorgesehen sind.

12. Geldscheinübermittlungssystem nach Anspruch 11, wobei der Computer Eingabemittel zum Eingeben einer Bedingung zum Suchen in der Suchdatenbank (41) über Banknoten, die nachzuverfolgen sind, in die Suchmaschine (21) und eine Anzeige zum Anzeigen der Suchbedingung und des Ergebnisses des Vergleichs des Nachverfolgungsdatensatzes einer bestimmten Banknote, der in der Nachverfolgungsdatenbank (42) gespeichert ist, mit den mehreren Suchdatensätzen, die in der Suchdatenbank (41) gespeichert sind, aufweist.

## Revendications

1. Système de traitement de billets de banque visant à tracer des billets de banque contrefaits, comprenant un guichet automatique bancaire (GAB) (1) permettant à un utilisateur de déposer des billets de banque, un dispositif terminal de traçage (2) incluant un moteur de recherche (21) pour tracer un utilisateur qui a déposé un billet de banque contrefait, et une base de données (4),
- ledit GAB comprenant un validateur (3) incluant un capteur optique et en option un capteur magnétique pour obtenir des caractéristiques optiques et en option magnétiques des billets de banque déposés dans ledit GAB, ledit validateur étant configuré pour juger les billets de banque déposés dans le GAB (1) comme étant des billets de banque authentiques, des billets de banque contrefaits ou des billets de banque douteux en déterminant si la caractéristique optique et en option magnétique du billet de banque est ou non dans une plage admissible, et pour juger une dénomination desdits billets de banque déposés dans ledit GAB ;
- un coffre-fort de stockage (36) pour empiler les billets de banque déposés dans ledit GAB et jugés comme étant des billets de banque contrefaits ou comme étant douteux par le validateur (3) afin de séparer et retenir les billets de banque qui ont été jugés comme étant des billets de banque contrefaits ou comme étant douteux par le validateur (3) ;
- ladite base de données (4) incluant une base de données de recherche (41) pour stocker, pour une pluralité de billets de banque douteux et contrefaits déposés dans ledit GAB, sous la forme d'un ensemble de données de recherche d'un billet de banque douteux ou contrefait déposé, une caractéristique optique dudit billet de banque déposé obtenue par le capteur optique du validateur (3) conjointement avec une information spécifique à l'utilisateur au moment où le billet de banque respectif est déposé dans ledit GAB pour la première fois par un utilisateur ;
- ladite base de données (4) comprenant en outre une base de données de trace (42) pour stocker, sous la forme d'un ensemble de données de trace d'un desdits billets de banque douteux, après qu'il a été vérifié comme étant un billet de banque contrefait à un centre extérieur au GAB, ou d'un desdits billets de banque contrefaits, une caractéristique optique obtenue par le capteur optique du validateur (3) à partir dudit un billet de banque, qui avait déjà été déposé une première fois dans ledit GAB, et pour lequel un ensemble de données de recherche existe dans ladite base de données de recherche, après que ledit billet de banque a été déposé dans ledit même GAB une deuxième fois,
dans lequel système ledit moteur de recherche (21) est configuré pour comparer un ensemble de données de trace d'un billet de banque spécifique stocké dans ladite base de données de trace (42) avec une pluralité d'ensembles de données de recherche stockées dans ladite base de données de recherche (41) pour déterminer un degré de similitude d'une caractéristique optique dudit billet de banque stocké dans ledit ensemble de données de trace avec une caractéristique optique d'un billet de banque stockée dans un desdits ensembles de données de recherche afin de réidentifier un billet de banque spécifique qui avait déjà été déposé dans ledit GAB une première fois et qui a été jugé par le validateur comme étant un billet de banque douteux ou contrefait, et pour tracer un utilisateur sur la base du degré de similitude résultant en récupérant une information spécifique à un utilisateur à partir de l'ensemble de données de recherche qui présente le degré de similitude le plus élevé.

2. Système de traitement de billets de banque selon la revendication 1, dans lequel la base de données de recherche (41) stocke des caractéristiques optiques et en option magnétiques dudit billet de banque douteux ou contrefait conjointement avec une information sur un identifiant spécifique au GAB et l'heure à laquelle les billets de banque sont traités.

3. Système de traitement de billets de banque selon la revendication 1, dans lequel la base de données de recherche (41) stocke des caractéristiques optiques et en option magnétiques dudit billet de banque douteux ou contrefait conjointement avec une information sur un identifiant spécifique au GAB et une version du programme de validation.

4. Système de traitement de billets de banque selon la revendication 1, dans lequel le GAB comporte une partie d'opération d'affichage comprenant un écran d'opération d'affichage guidant une opération, la partie d'opération d'affichage affichant des indications concernant une opération permettant d'obtenir les caractéristiques optiques et en option magnétiques dudit billet de banque douteux ou contrefait de la base de données de trace (42) à partir des billets de banque pour tracer l'utilisateur.

5. Système de traitement de billets de banque selon la revendication 1, dans lequel le GAB, après le jugement du validateur (3), lorsqu'il y a des billets de banque empilés dans le coffre-fort de stockage, comporte une partie d'opération d'affichage affichant un message indiquant que des billets de banque contrefaits ne peuvent pas être déposés.

6. Système de traitement de billets de banque selon la revendication 1, dans lequel le GAB, après le jugement du validateur (3), lorsqu'il y a des billets de banque empilés dans le coffre-fort de stockage, comporte un moyen d'impression pour imprimer sur un support imprimé un message indiquant que des billets de banque douteux doivent être inspectés par une banque centrale afin d'émettre le support sous la forme d'un reçu à l'utilisateur des billets de banque.

7. Système de traitement de billets de banque selon la revendication 1, dans lequel la base de données de recherche (41) et la base de données de trace (42) sont formées dans des zones différentes de la même base de données (4).

8. Procédé de traitement d'informations relatives à des billets de banque utilisant un système de traitement de billets de banque comprenant un guichet automatique bancaire (GAB) (1) permettant à un utilisateur de déposer des billets de banque, comprenant les étapes consistant à :
- obtenir des caractéristiques optiques et en option magnétiques des billets de banque déposés dans ledit GAB au moyen d'un capteur optique et en option magnétique,
- juger les billets de banque déposés dans ledit GAB (1) comme étant des billets de banque authentiques, des billets de banque contrefaits ou des billets de banque douteux en déterminant si la caractéristique optique et en option magnétique obtenue du billet de banque est ou non dans une plage admissible,
- juger une dénomination desdits billets de banque déposés dans ledit GAB ;
- empiler dans un coffre-fort de stockage (36) les billets de banque qui ont été déposés dans ledit GAB et jugés comme étant des billets de banque contrefaits ou comme étant douteux par le validateur (3) afin de séparer et retenir les billets de banque qui ont été jugés comme étant des billets de banque contrefaits ou comme étant douteux ;
- stocker dans une base de données de recherche (41) incluse dans ladite base de données (4), pour une pluralité de billets de banque douteux et contrefaits déposés dans ledit GAB, un ensemble de données de recherche d'un billet de banque douteux ou contrefait déposé, une caractéristique optique dudit billet de banque déposé obtenue par le capteur optique du validateur (3) conjointement avec une information spécifique à l'utilisateur au moment où le billet de banque respectif est déposé dans ledit GAB pour la première fois par un utilisateur ;
- stocker dans une base de données de trace (42) incluse dans ladite base de données (4), un ensemble de données de trace d'un desdits billets de banque douteux, après qu'il a été vérifié comme étant un billet de banque contrefait à un centre extérieur au GAB, ou d'un desdits billets de banque contrefaits, une caractéristique optique obtenue par le capteur optique du validateur (3) à partir dudit un billet de banque, qui avait déjà été déposé une première fois dans ledit GAB, et pour lequel un ensemble de données de recherche existe dans ladite base de données de recherche, après que ledit billet de banque a été déposé dans ledit même GAB une deuxième fois ;
- comparer un ensemble de données de trace d'un billet de banque spécifique stocké dans ladite base de données de trace (42) avec une pluralité d'ensembles de données de recherche stockées dans ladite base de données de recherche (41) à l'aide dudit moteur de recherche (21) et déterminer un degré de similitude d'une caractéristique optique dudit billet de banque stockée dans ledit ensemble de données de trace avec une caractéristique optique d'un billet de banque stockée dans un desdits ensembles de données de recherche afin de réidentifier un billet de banque spécifique qui avait déjà été déposé dans ledit GAB une première fois et qui a été jugé comme étant un billet de banque douteux ou contrefait ; et
- tracer un utilisateur sur la base du degré de similitude résultant en récupérant une information spécifique à un utilisateur à partir de l'ensemble de données de recherche qui présente le degré de similitude le plus élevé.

9. Procédé de traitement d'informations relatives à des billets de banque selon la revendication 8, comprenant en outre une étape consistant à afficher, sur un écran d'affichage, pour les billets de banque jugés comme étant des billets de banque contrefaits ou comme étant douteux par le validateur (3), un message indiquant que les billets de banque sont retenus par la banque pour inspection.

10. Système de traitement de billets de banque selon la revendication 1, dans lequel la base de données de recherche (41) et la base de données de trace (42) sont prévues dans le GAB et le moteur de recherche (21) est inclus dans un ordinateur personnel prévu dans un système d'agence locale.

11. Système de traitement de billets de banque selon la revendication 10, dans lequel la base de données de recherche (41), la base de données de trace (42) et l'ordinateur sont prévus dans chaque système d'agence locale.

12. Système de traitement de billets de banque selon la revendication 11, dans lequel l'ordinateur présente un moyen d'entrée pour entrer dans le moteur de recherche (21) une condition de recherche dans la base de données de recherche (41) concernant des billets de banque à tracer et un afficheur pour afficher la condition de recherche et le résultat de la comparaison dudit ensemble de données de trace d'un billet de banque spécifique stocké dans ladite base de données de trace (42) avec ladite pluralité d'ensembles de données de recherche stockés dans ladite base de données de recherche (41).
